Europäisches Patentamt

(19) European Patent Office

Office européen des brevets

(11) Numéro de publication: **0 109 894**
**B1**

## (12) FASCICULE DE BREVET EUROPÉEN

(45) Date de publication du fascicule du brevet:
22.07.87

(21) Numéro de dépôt: **83402186.7**

(22) Date de dépôt: **10.11.83**

(51) Int. Cl.⁴: **C 08 L 95/00,** E 01 C 7/18 //
C08L23/08

(54) Compositions de bitumes-polymères applicables à la réalisation de liants routiers.

(30) Priorité: **17.11.82 FR 8219200**

(43) Date de publication de la demande:
**30.05.84 Bulletin 84/22**

(45) Mention de la délivrance du brevet:
**22.07.87 Bulletin 87/30**

(84) Etats contractants désignés:
**AT BE CH DE GB IT LI LU NL SE**

(56) Documents cité:
**DE-A-1 644 771**

(73) Titulaire: **Société Chimique des Charbonnages
S.A., Tour Aurore Place des Reflets, F-92080
Paris La Défense 2 Cédex 5 (FR)**

(72) Inventeur: **Decroix, Jean- Claude, Rue de la Forge
aux Fers Saint Nicolas Les Arras, F-62000 Arras
(FR)**

(74) Mandataire: **Dubost, Thierry, SOCIETE CHIMIQUE
DES CHARBONNAGES Service Propriété
Industrielle B.P. 57, F-62670 Mazingarbe (FR)**

**0 109 894**

## Description

La présente invention concerne des compositions de bitumes-polymères applicables à la réalisation de liants routiers.

L'addition de polymères à des bitumes en vue d'améliorer la cohésivité et l'adhésivité des liants routiers est déjà connue. Ainsi DE-A- 1 644 771 décrit une composition comprenant jusqu'à 95 % en poids d'asphalte aromatique de pétrole et au moins 5 % en poids d'un copolymère d'éthylène et d'ester acrylique ou méthacrylique comprenant de 10 à 40 % en poids d'ester.

L'amélioration des performances des liants routiers, en particulier l'amélioration de leurs propriétés de cohésivité et d'adhésivité, est une préoccupation constante de l'industrie des travaux routiers et constitue le but de la présente invention.

L'invention concorne des compositions ayant un point de fragilité mesuré selon la norme IP 80/53 inférieur ou égal à -23°C, comprenant de 95 à 99 % en poids d'un constituant bitumineux et de 1 à 5% en poids d'un polymère, caractérisées en ce que le constituant bitumineux est soit un bitume, soit un mélange d'au moins 50 % en poids de bitume et d'au plus 50 % en poids de goudron, et possède une pseudo-viscosité à 30°C, déterminée selon la norme NFT-66005, comprise entre 200 et 1000 secondes, et un ce que ledit polymère est un copolymère ayant un indice de fluidité compris entre 5 et 50 dg/min et une température de Vicat comprise entre 30 et 85°C et comprenant

- de 88 à 98,7 % en moles de motifs dérivés de l'éthylène,
- de 1 à 10 % en moles de motifs dérivés d'au moins un ester choisi parmi les acrylates et méthacrylates d'alkyle, ledit groupe alkyle ayant de 1 à 6 atomes de carbone et
- de 0,3 à 3 % en moles de motifs dérivés de l'anhydride maléique.

Les terpolymères utilisables dans les compositions selon l'invention ont été décrits dans le brevet francais n° 2 498 609. Leur indice de polydispersité Mw/Mm est généralement supérieur à 6. Facultativement ils peuvent comprendre un quatrième monomère copolymérisable avec les trois premiers; ce quatrième monomère peut être choisi parmi les $\alpha$-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone, et peut être présent à raison de jusqu'à 5 % en moles, la proportion de l'éthylène dans le tétrapolymère étant alors diminuée d'autant par rapport à la gamme indiquée ci-dessus.

Les performances des compositions décrites ci-dessus sont encore améliorées par l'addition, pour 100 parties en poids de ladite composition, de jusqu'à 1 partie d'un agent de modification ou de réticulation thermoréversible tel qu'un alcool lourd, une mono-, di- ou trialcoolamine ou bien un alcool polyfonctionnel. On peut citer, entre autres, l'alcool benzylique comme exemple d'alcool lourd, la monoéthanolamine et la diéthanolamine comme exemples alcool-amines, l'éthylèneglycol et le pentaerythritol comme exemples d'alcools polyfonctionnels utilisables conformément à la présente invention.

Les compositions selon l'invention possèdent des propriétés physiques remarquables, notamment un point de fragilité (ou point de Fraass) mesuré selon la norme IP 80/55 inférieur ou égal à -23°C. Ces propriétés expliquent leur aptitude à l'obtention de liants routiers d'excellente qualité. Ces compositions sont en effet applicables notamment à la réalisation d'enduits routiers superficiels, liants fondus sur lesquels on dépose des gravillons.

Les exemples ci-après sont donnés à titre illustratif et non limitatif de la présente invention.

## EXEMPLES 1 à 5

On considère un mélange (A1) constitué de 60 % en poids de bitume et de 40 % en poids de goudron, ayant une pseudo-viscosité à 30°C (selon la norme NFT-66005) égale à 400 secondes.

On considère d'autre part un terpolymère (B1) comprenant 90,5 % en moles de motifs dérivés de l'éthylène, 8,5 % en moles de motifs dérivés de l'acrylate d'éthyle et 1,0 % en moles de motifs dérivés de l'anhydride maléique. Ce terpolymère a un indice de fluidité (mesuré selon ASIM D 1238-73) de 38 dg/min, un indice de polydispersité Mw/Mn égal à 19 et une masse volumique égale à 0,948 g/cm$^3$.

On réalise, par mélange homogène, des compositions comprenant X % du terpolymère (B1) et (100-X) % du mélange (A1). Des compositions ainsi obtenues on mesure d'une part la pseudo-viscosité à 30°C (selon la norme NET-66005) et d'autre part le point de fragilité (selon la norme IP 80/53) exprimé en degrés Celsius.

Les compositions ainsi que les propriétés mesurées sont indiquées dans le tableau I ci-dessous.

Ces compositions sont utilisables pour la réalisation d'enduits routiers.

2

**TABLEAU 1**

| Exemple | 1 | 2 | 3 |
|---|---|---|---|
| X (%) | 1 | 2 | 3 |
| Pseudo-viscosité (secondes) | 555 | 700 | 1 920 |
| Point de fragilité (°C) | - 23,5 | - 27,5 | - 27,0 |

**EXEMPLES 4 à 6**

On considère un mélange (A2) constitué de 60 % en poids de bitume et de 40 % en poids de goudron, ayant une pseudo-viscosité à 30°C (selon la norme NFT-66005) égale à 250 secondes. On considère d'autre part le même terpolymère (B1) qu'aux exemples précédents.

On réalise, par mélange homogène, des compositions comprenant X % du terpolymère (B) et (100-X) % du mélange (A2). Sur les compositions ainsi obtenues on mesure, comme précédemment, la pseudo-viscosité à 30°C et le point de dragilité dont les valeurs figurent dans le tableau II ci-après.

**TABLEAU II**

| Exemple | 4 | 5 | 6 |
|---|---|---|---|
| X (%) | 3 | 4 | 4,5 |
| Pseudo-viscosité (secondes) | 930 | 1 740 | 2 160 |
| Point de fragilité (°C) | - 28 | - 26,5 | - 25 |

Ces compositions sont utilisables pour la réalisation d'enduits routiers.

**EXEMPLE 7**

On considère un terpolymère (B2) comprenant 96,7 % en moles de motifs dérivés de l'éthylène, 2,3 % en moles de motifs dérivés de l'acrylate d'éthyle et 1 % en moles de motifs dérivés de l'anhydride maléique. Ce terpolymère a un indice de fluidité (mesuré selon ASTM D 1238-73) de 6,4 dg/min, un indice de polydispersité $Mw/Mn$ égal à 7,4 et une température Vicat égale à 73°C.

On a réalisé à partir de 3 % en poids du terpolymère B2 et de 97 % en poids d'un mélange A1 une composition présentant de bonnes propriétés pour la réalisation d'enduits routiers.

**Revendications**

1. Compositions ayant un point de fragilité mesuré selon la norme IP 80/53 inférieur ou égal à -23°C, comprenant de 95 à 99 % en poids d'un constituant bitumineux et de 1 à 5 % en poids d'un polymère, caractérisées en ce que le constituant bitumineux est soit un bitume, soit un mélange d'au moins 50% en poids de bitume et d'au plus 50 % en poids de goudron, et possède une pseudo-viscosité à 30°C, déterminée selon la norme NFT-66005, comprise entre 200 et 1000 secondes, et en ce que ledit polymère est un copolymère ayant un indice de fluidité compris entre 5 et 50 dg/min et une température de Vicat comprise entre 30 et 85°C et comprenant
- de 88 à 98,7 % en moles de motifs dérivés de l'éthylène,
- de 1 à 10 % en moles de motifs dérivés d'au moins un ester choisi parmi les acrylates et méthacrylates d'alkyle, ledit groupe alkyle ayant de 1 à 6 atomes de carbone, et
- de 0,3 à 3 % en moles de motifs dérivés de l'anhydride, maléique.

2. Compositions selon la revendication 1, caractérisées en ce que ledit terpolymère a un indice de polydispersité supérieur à 6.

3. Compositions selon l'une des revendications 1 et 2 caractérisées en ce que ledit terpolymère comprend un quatrième monomère choisi parmi les α-oléfines ayant de 3 à 8 atomes de carbone, les monomaléates d'alkyle et les maléates de dialkyle dont les groupes alkyle ont de 1 à 6 atomes de carbone, l'acétate de vinyle, le monoxyde de carbone.

4. Compositions selon la revendication 6, caractérisées en ce que ledit quatrième monomère est présent à raison de jusqu'à 5 % en moles.

5. Compositions selon l'une des revendications 1 à 4, caractérisées en ce qu'elles comprennent en outre, pour 100 parties en poids, jasqu'à 1 partie en poids d'un agent de modification ou de réticulation thermoréversible.

6. Compositiors selon la revendication 5, caractérisées en ce que ledit agent est choisi parmi les alcools lourds, les mono-,di- et trialcoolamines et les alcools polyfonctionnels.

7. Application des compositions selon l'une des revendications 1 à 6 à l'obtention de liants routiers.


## Patentansprüche

1. Zusammensetzungen mit einem nach der Norm IP 80/53 gemessenen Sprödigkeitspunkt unter oder gleich -23°C, enthaltend 95 bis 99 Gew.-% eines bituminösen Bestandteils und 1 bis 5 Gew.-% eines polymers, dadurch gekennzeichnet, daß der bituminöse Bestandteil entweder ein Bitumen oder eine Mischung aus mindestens 50 Gew.-% Bitumen und höchstens 50 Gew.-% Teer ist und eine nach der Norm NFT-66005 bestimmte Pseudoviskosität bei 30°C zwischen 200 und 1000 s besitzt, und daß das genannte polymer ein einen Fließindex zwischen 5 und 50 dg/ min und einen Vicatpunkt zwischen 30 und 85°C aufweisendes polymer ist, das enthält:
- 88 bis 98,7 Mol.-% an von Äthylen abstammenden Einheiten,
- 1 bis 10 Mol.-% an von mindestens einem Ester abstammenden Einheiten, welcher Ester ausgewählt ist aus den Alkylacrylaten und Alkylmethacrylaten, wobei die genannte Alkylgruppe 1 bis 6 Kohlenstoffatome enthält, und
- 0,3 bis 3 Mol.-% an von Maleinsäureanhydrid abstammenden Einheiten.

2. Zusammensetzungen nach Anspruch 1, dadurch gekennzeichnet, daß das genannte Terpolymer eine polydispersitätszahl über 6 besitzt.

3. Zusammensetzungen nach Anspruch 1 oder 2, dadurch gekennzeichnet, daß das genannte Terpolymer ein viertes Monomer enthält, das ausgewählt ist aus den α-Olefinen mit 3 bis 8 Kohlenstoffatomen, den Alkylmonomaleaten und den Dialkylmaleaten, deren Alkylgruppen 1 bis 6 Kohlenstoffatome besitzen, Vinylacetat und Kohlenmonoxid.

4. Zusammensetzungen nach Anspruch 3, dadurch gekennzeichnet, daß das genannte vierte Monomer in einer Menge bis zu 5 Mol.-% vorliegt.

5. Zusammensetzungen nach einem der Ansprüche 1 bis 4, dadurch gekennzeichnet, daß sie weiters auf 100 Gewichtsteile bis zu 1 Gewichtsteil eines thermoreversiblen Modifizierungs- oder Vernetzungsmittels enthalten.

6. Zusammensetzungen nach Anspruch 5, dadurch gekennzeichnet, daß das genannte Mittel ausgewählt ist aus den höheren Alhoholen, den Mono-, Di- und Trialkoholaminen und den polyfunktionellen Alkoholen.

7. Verwendung der Zusammensetzungen nach einem der Ansprüche 1 bis 6 for die Herstellung von Straßenbindemitteln.


## Claims

1. Compositions having a breaking point (measured according to standard IP 80/53) below or equal to -23°C, comprising from 95 to 99 % by weight of a bituminous component and from 1 to 5 % by weight of a polymer, characterised in that the said bituminous component is either a bitumen or mixture of at least 50 % by weight of bitumen and at most 50 % by weight of tar, and has a pseudo-viscosity at 30°C, determined according to standard NFT-66005, between 200 and 1 000 seconds, and the said polymer is a terpolymer having a melt index between 5 and 50 dg/min and a Vicat softening point between 30°C and 85°C, and comprising:
- from 88 to 98.7 mol % of units derived from ethylene,
- from 1 to 10 mol % of units derived from at least one ester selected from alkyl acrylates and methacrylates, the said alkyl group having from 1 to 6 and
- from 0.3 to 3 mol % of units derived from maleic anhydride.

2. Compositions according to claim 1, characterised in that the said terpolymer has a polydispersity index of more than 6.

3. Compositions according to one of claims 1 and 2, characterised in that the said terpolymer contains a fourth monomer selected from α -olefins having from 3 to 8 carbon atoms, monoalkyl maleates and dialkyl maleates in which the alkyl groups have from 1 to 6 carbon atoms, vinyl acetate and carbon monoxide.

4. Compositions according to claim 3, characterised in that the said fourth monomer is present in an amount of up to 5 mol %.

5. Compositions according to one of claims 1 to 4, characterised in that they further contain, per 100 parts by weight, up to 1 part by weight of an agent for thermally reversible crosslinking or modification.

6. Compositions according to claim 5, characterised in that the said agent is selected from high molecular weight alcohols, mono-, di- end trialcoholamines and polyhydric alcohols.

7. Application of the compositions according to one of claims 1 to 6 to the preparation of road-surface binders.